# EUROPEAN PATENT SPECIFICATION

(11) **EP 2 833 476 B1**
(45) Date of publication and mention of the grant of the patent: **11.09.2019**
(21) Application number: 13767755.5
(22) Date of filing: 26.03.2013
(51) Int. Cl.: G01D 4/00, G01D 11/24, H01Q 9/42, G01F 15/06, H01Q 1/22, H01Q 1/48, H01Q 9/36

(54) **FLOW VOLUME MEASURING APPARATUS**
VORRICHTUNG ZUR MESSUNG DER DURCHFLUSSMENGE
APPAREIL DE MESURE DE VOLUME D'ÉCOULEMENT

(30) Priority: 29.03.2012 JP 2012076600
(43) Date of publication of application: 04.02.2015
(73) Proprietor: Panasonic Corporation, Kadoma-shi, Osaka 571-8501 (JP)
(72) Inventor: MATSUMOTO, Takayuki, 2-1-61, Shiromi Chuo-ku Osaka 540-6207 (JP); YOSHIKAWA, Yoshishige, 2-1-61, Shiromi Chuo-ku Osaka 540-6207 (JP)
(74) Representative: SSM Sandmair
(86) International application number: PCT/JP2013/002051
(87) International publication number: WO 2013/145720

(56) References cited:
- EP-A1- 0 718 908
- JP-A- H0 927 092
- JP-A- H1 186 174
- JP-A- H1 186 174
- JP-A- S63 142 219
- JP-A- 2000 269 817
- JP-A- 2003 338 722
- JP-A- 2005 214 764
- JP-A- 2010 016 917
- JP-A- 2010 088 098
- JP-A- 2011 086 221
- US-A- 5 621 419
- US-A- 6 115 677

## Description

### Technical Field

The present invention relates to a flow meter device. Particularly, the present invention relates to a flow meter device which measures the flow (flow rate) of a target.

### Background Art

In recent years, an automated meter reading system has been introduced, in which a flow meter device installed in a building such as a house measures the usage amount of gas, electricity, or tap water, and measured data is gathered via radio (wireless) communication. In the automated meter reading system, there has been a need for a small-sized flow meter device for easier installation, etc..

As such a flow meter device, for example, there has been proposed a flow meter device in which a radio adapter slave device is attached on the surface of a gas meter (see Patent Literature 1).

The radio adapter slave device disclosed in Patent Literature 1 contains therein a board mounted planar antenna. In the board mounted planar antenna, a ground conductor plate and a short conductor of a radio conductor unit are connected to each other via a wire pattern of a printed circuit board. This ground conductor plate is used as a ground of the radio conductor unit.

### Citation List

### Patent Literature

Patent Literature 1: Japanese Laid-Open Patent Application Publication No. Hei 10-313212

Document EP-A-0718908 discloses an RF transmitter with an impedance matching circuit. A battery provides power to the positive operating voltage line and the ground, but is decoupled from both of these lines by impedances. The metal connected to one terminal of the battery acts as antenna radiating the transmitting circuit output signal. The coupling impedance acts as an antenna extension coil so that no separate antenna is required. This way, the size can be reduced and it can be mounted in or on a meter. Document US-A-6115677 discloses a meter device with a radio module connected. A planar antenna is mounted inside a non-metallic housing cover of the meter. The meter is mounted on a wall, and the main radiation direction of the planar antenna is perpendicularly away from the wall. This makes the meter especially suited for centrally supplied dwellings or offices. Consumption measurement is achieved by the wireless system.

Document US-A-5621419 discloses a radio transmitter antenna comprising two planar circular conductive coaxial and parallel spaced members and a conductive pillar extending between and electrically interconnecting the members with an input at a point along the pillar and a second on one of the members.

### Summary of Invention

The present invention is defined by independent claim 1 with particular embodiments being represented by the corresponding dependent claims.

### Technical Problem

In the prior art, the size of the ground conductor unit is not sufficiently large for the wavelength of a radio frequency (RF) signal used in radio (wireless) communication. The ground conductor unit is affected by metal existing in its vicinity. This may degrade antenna characteristics such as a gain and a radiation efficiency.

If the size of the ground conductor unit is increased to avoid the above, the size of the radio adapter slave device may increase in size.

In addition, since the ground conductor plate is provided as dedicated to the ground of the radio conductor unit, the size of the radio adapter slave device increases.

The present invention has been made to solve the above described problem, and an object of the present invention is to provide a small-sized flow meter device which improves antenna characteristics as compared to a conventional example.

### Solution to Problem

According to an aspect of the present invention, a flow meter device comprises a housing which is formed of an electrically-conductive material and accommodates therein a sensor for detecting a flow of a target; a radiation conductor which radiates an electric wave of a radio frequency signal; a circuit board which is electrically connected to the radiation conductor and in which a power supplying circuit for supplying radio-frequency electric power of the radio frequency signal to the radiation conductor is mounted; a casing which is formed of a non-electrically-conductive material, is placed on the housing, and accommodates therein the radiation conductor and the circuit board; and a connecting member which is formed of the electrically-conductive material and electrically connects the housing and a ground of the circuit board to each other.

### Advantageous Effects of Invention

The present invention has the above described configuration and can achieve advantages that it is possible to provide a small-sized flow meter device which improves antenna characteristics as compared to a conventional example.

The above and further objects, features, and advantages of the invention will more fully be apparent from the following detailed description with accompanying drawings.

### Brief Description of Drawings

Fig. 1 is a front view showing a flow meter device according to Embodiment 1 of the present invention.
Fig. 2 is a side view showing the flow meter device of Fig. 1.
Fig. 3 is a schematic front view showing the configuration of the interior of the flow meter device of Fig. 1.
Fig. 4 is a schematic side view showing the configuration of the interior of the flow meter device of Fig. 2.
Fig. 5 is a schematic view showing the interior of a flow meter device according to Embodiment 2 of the present invention.
Fig. 6 is a schematic view showing the interior of a flow meter device according to Embodiment 3 of the present invention.
Fig. 7 is a front view showing a flow meter device according to Embodiment 4 of the present invention.

### Description of Embodiment

According to an aspect of the present invention, a flow meter device comprises a housing which is formed of an electrically-conductive material and accommodates therein a sensor for detecting a flow of a target; a radiation conductor which radiates an electric wave of a radio frequency signal; a circuit board which is electrically connected to the radiation conductor and in which a power supplying circuit for supplying radio-frequency electric power of the radio frequency signal to the radiation conductor is mounted; a casing which is formed of a non-electrically-conductive material, is placed on the housing, and accommodates therein the radiation conductor and the circuit board; and a connecting member which is formed of the electrically-conductive material and electrically connects the housing and a ground of the power supplying circuit to each other.

The flow meter device may further comprise a conductive member which is accommodated in the casing and electrically connected to the power supplying circuit; and a radio frequency isolating circuit which is disposed between the power supplying circuit and the conductive member and electrically isolates the power supplying circuit from the conductive member with respect to the radio frequency signal.

In the flow meter device, the radio frequency isolating circuit may include a parallel resonant circuit which resonates with the radio frequency signal and increases an impedance.

In the flow meter device, the radio frequency isolating circuit may include a photo coupler for electrically insulating the power supplying circuit from the conductive member.

In the flow meter device, the circuit board includes a power supplying point at which the power supplying circuit and the radiation conductor are electrically connected to each other, and the connecting member is placed in the vicinity of the power supplying point and on an opposite side of the radiation conductor with respect to the power supplying point.

The flow meter device may further comprise a conductive pipe which is formed of an electrically-conductive material and electrically connected to the housing; and a non-conductive pipe which is formed of a non-electrically-conductive material and coupled to the conductive pipe, wherein a length of the conductive pipe may be set based on an antenna gain of the radiation conductor.

Hereinafter, embodiments of the present invention will be described with reference to the drawings.

Throughout the drawings, the same or corresponding components are designated by the same reference symbols and will not be described repeatedly.

For easier explanation, as shown in the drawings, "front", "rear", "upper", "lower", "right" and "left" are defined. More specifically, the direction in which a casing 20 is placed with respect to a housing 10 will be referred to "front", and the opposite direction will be referred to as "rear." "right" and "left" are from the perspective of the flow meter device facing forward. Furthermore, the upper and lower sides in a vertical direction will be referred to as "upper" and "lower."

### (Embodiment 1)

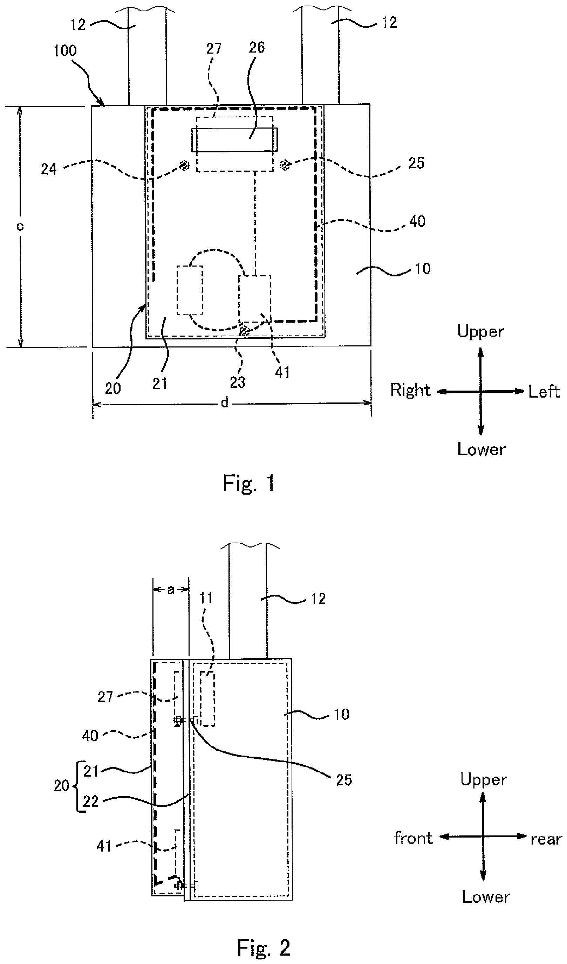

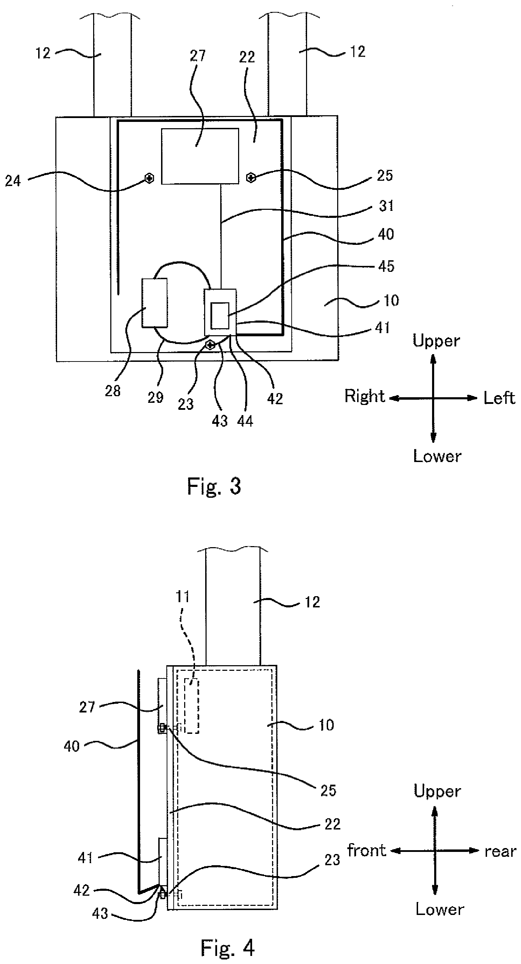

Fig. 1 is a front view showing a flow meter device 100 according to Embodiment 1. Fig. 2 is a side view showing the flow meter device 100. Fig. 3 is a schematic front view showing the configuration of the interior of the flow meter device 100. Fig. 4 is a schematic side view showing the configuration of the interior of the flow meter device 100.

The flow meter device 100 is a device which transmits, for example, data detected by a sensor 11 to a computer in a utility company of gas, electricity, or tap water via radio (wireless) communication.

The flow meter device 100 includes a housing 10 for accommodating the sensor 11 for measuring the flow(rate) of a fluid, and a casing 20 for accommodating components which control the operation of the sensor 11, and transmit the data detected by the sensor 11 to outside.

The housing 10 is formed of an electrically-conductive material. As the electrically-conductive material, for example, there are metal such as aluminum and stainless, and an electrically-conductive resin.

The housing 10 has a substantially rectangular parallelepiped shape. Two pipes 12 used to flow a target into and out of the housing 10 are connected to the upper surface of the housing 10. The housing 10 accommodates the sensor 11 therein. The target flows into the housing 10 through the inflow pipe 12, then the sensor 11 detects the flow of the target, and then the target flows to outside the housing 10 through the outflow pipe 12. The target may be, for example, gas, tap water, or electricity.

The housing 10 preferably has a shape in which a sum of the vertical length of the housing 10 :c and the rightward and leftward length: d of the housing 10 is λ/4. λ indicates the wavelength of an electric wave radiated from a radiation conductor 40 as will be described later.

The casing 20 is placed on the wall surface of a front side of the housing 10 and formed of a non-electrically-conductive material. As the non-electrically-conductive material, for example, there is an electrically-insulative resin such as polypropylene or ABS. The casing 20 has a rectangular parallelepiped shape in which a thickness in a forward and rearward direction is smaller than a vertical dimension and a rightward and leftward dimension. The casing 20 is divided into front and rear parts which are a first casing 21 at a front side and a second casing 22 at a rear side.

The casing 22 at the rear side is mounted to the front surface of the housing 10 by, for example, three first to third screws 23 to 25 and first to third nuts. For example, the first screw 23 is mounted to the region of the lower portion of the second casing 22 in the vicinity of a center in the rightward and leftward direction, while the second screw 24 is mounted to the left portion of the upper portion of the second casing 22, and the third screw 25 is mounted to the right portion of the upper portion of the second casing 22. The first to third screws 23 to 25 and the first to third nuts are formed of the electrically-conductive material. As examples of the electrically-conductive material, for example, there are metal such as aluminum or stainless, an electrically-conductive resin, etc.. The screws 23 to 25 penetrate the second casing 22 from the housing 10 side. The heads of the screws 23 to 25 are present inside the housing 10, while the legs of the screws 23 to 25 protrude from the surface of the second casing 22. The second casing 22 is fastened to the housing 10 in such a manner that the nuts are attached to the legs of the screws 23 to 25, respectively.

The first casing 21 is connected to the second casing 22 in such a manner that the first casing 21 covers the second casing 22. A display unit 26 is attached on the front surface of the first casing 21. The display unit 26 displays, for example, the flow (rate) of the target which is detected by the sensor 11.

The second casing 22 and the first casing 21 are joined together by bonding, welding or screws. Thus, a space which is tightly closed and has a water seal capability is formed inside the casing 20. The casing 20 accommodates in this inner space, the radiation conductor 40, a radio communication circuit board 41, a measurement circuit board 27 and a battery 28. The housing 10, the second casing 22, the radio communication circuit board 41, the radiation conductor 40 and the first casing 21 are placed in this order in a thickness direction (i.e., forward and rearward direction) of the circuit board.

The measurement circuit board 27 includes an integrated circuit (not shown) in which programs are mounted. The integrated circuit includes a signal generating circuit for generating a signal to be transmitted, based on a detection signal from the sensor 11. The integrated circuit operates based on the programs, and thus obtains the flow of the target such as the gas or the tap water based on the detection signal from the sensor 11. The obtaining method of the measurement value is not particularly limited. For example, in a case where the target is the gas, any known method such as a membrane method or an ultrasonic method may be used. It is sufficient that the programs required to calculate the measurement value based on the measurement method selected is mounted in the integrated circuit.

The radio communication circuit board 41 is configured such that a transmission circuit for transmitting data via radio communication, a receiving circuit for processing the data received via the radio communication, a matching circuit for matching the radiation conductor 40 with the transmission circuit and the receiving circuit, etc., are mounted onto a board. An integrated circuit 45 which is electrically connected to the radiation conductor 40 and includes a power supplying circuit for supplying a radio frequency signal to the radiation conductor 40 is mounted onto the radio communication circuit board 41. The integrated circuit 45 for radio communication is electrically connected to an integrated circuit of the measurement circuit board 27 via a wire 31 and electrically connected to the radiation conductor 40. The integrated circuit 45 for radio communication applies an electric potential to the radiation conductor 40 according to the measurement data from the integrated circuit of the measurement circuit board 27, thereby transmitting the RF signal indicating the measurement data.

One end of a conductive wire 43 is connected to the ground of the radio communication circuit board 41. The other end of the conductive wire 43 is electrically connected to the screw (in the present embodiment, first screw 23 located in the lower portion of the casing 20) closest to the radio communication circuit board 41, among the screws 23 to 25. The conductive wire 43 is formed of an electrically-conductive material such as copper, aluminum, or iron. In the present example, the other end of the conductive wire 43 is wound around the leg of the first screw 23 and fastened thereto by a first bolt. This allows the conductive wire 43 to electrically connect the ground of the radio communication circuit board 41 to the first screw 23. The first screw 23 is electrically connected to the housing 10. This allows the ground of the radio communication circuit board 41 to be electrically connected to the housing 10 via the conductive wire 43 and the screw. Also, the ground of the integrated circuit 45 including the power supplying circuit is connected to the ground of the radio communication circuit board 41. Therefore, the conductive wire 43 and the first screw 23 serve as a connecting member for connecting the housing 10 to the ground of the integrated circuit 45 (power supplying circuit) of the radio communication circuit board 41. This allows the electric potential of the housing 10 to become substantially equal to that of the ground of the integrated circuit 45 of the radio communication circuit board 41. The housing 10 itself having a large area serves as the ground.

As shown in Fig. 3, preferably, a connecting position 44 at which the conductive wire 43 is connected to the ground of the radio communication circuit board 41, the conductive wire 43 and the first screw 23 are in the vicinity a power supplying point 42 as will be described later, and are on the opposite side of the radiation conductor 40 with respect to the power supplying point 42. Since the connecting position 44 and the first screw 23 are in the vicinity of the power supplying point 42, the distance from the power supplying point 42 to the housing 10 is reduced. Also, since the conductive wire 43 is placed on the opposite side of the radiation conductor 40 with respect to the power supplying point 42, it is possible to prevent the conductive wire 43 from serving as the ground for the radiation conductor 40.

The battery 28 is an electric power supply for supplying electric power to electric components and the like mounted in the radio communication circuit board 41. In particular, the electric power supplied from the battery 28 is converted into RF power via the power supplying circuit 45 and supplied to the radiation conductor 40. The battery 28 is electrically connected to the power supplying circuit of the circuit board 41 via a wire 29, and the like.

The radiation conductor 40 radiates as the electric wave the RF signal generated by modulation in the transmission circuit, or receives the electric wave (RF signal) from outside and delivers the electric wave to the receiving circuit for demodulating the electric wave. In the present embodiment, the radiation conductor 40 is an inverted-L antenna. The radiation conductor 40 has a thin rod shape, and is formed of an electrically-conductive material such as copper. The length of the radiation conductor 40 is set to λ/4 when the wavelength of the RF signal of the radio frequency signal is λ.

The base end of the radiation conductor 40 is connected to the output section (power supplying terminal) (power feeding terminal) of the radio communication circuit board 41 at the power supplying point 42. The radiation conductor 40 is bent to extend in the inner space of the casing 20 so that the radiation conductor 40 is as distant as possible from the housing 10 and the constituents of the radiation conductor 40 are not close to each other. In the present example, the radiation conductor 40 is bent at four points.

Specifically, the radiation conductor 40 extends from the power supplying point 42, in a direction (forward) that is away from the housing 10, and is bent in a direction parallel to the housing 10 at a first corner in the vicinity of the front wall portion of the casing 20. The radiation conductor 40 extends leftward from the first corner along the lower side surface of the casing 20, and then is bent upward at a right angle at a second corner in the vicinity of the left lower corner portion of the casing 20. The radiation conductor 40 extends upward from the second corner along the left side surface of the casing 20, and is bent rightward at a third corner in the vicinity of the left upper corner portion of the casing 20. The radiation conductor 40 extends rightward from the third corner along the upper side surface of the casing 20 and is bent downward at a right angle at a fourth corner in the vicinity of the right upper corner portion of the casing 20. Then, the radiation conductor 40 extends downward from the fourth corner along the right side surface of the casing 20 to the tip end.

The length from the front surface of the housing 10 to the first comer: a (see Fig. 2) is set to a largest possible value. The length: a is preferably larger than λ/32. If the length: a is smaller than λ/32, the electric potential difference between the radiation conductor 40 and the housing 10 is small, and hence the electric wave is not easily radiated from the radiation conductor 40. A portion of the radiation conductor 40 from the first corner to the tip end is provided to extend in parallel with the front surface of the housing 10. Therefore, the portion of the radiation conductor 40 from the first corner to the tip end faces the housing 10 with a spacing of the length : a from the housing 10.

In the flow meter device 100 configured as described above, the target flows through the pipe 12 and the sensor 11 detects the flow of the target. The integrated circuit of the measurement circuit board 27 measures the flow of the target based on the detection value from the sensor 11. The integrated circuit 45 of the radio communication circuit board 41 creates the RF signal corresponding to the measurement value from the integrated circuit of the measurement circuit board 27 and provides the RF signal to the radiation conductor 40. An electric field is formed between the radiation conductor 40 and the housing 10 (and pipe 12) serving as the ground for the radiation conductor 40. This electric field changes according to the RF signal given. The change in this electric field becomes the electric wave radiated from the radiation conductor 40.

In accordance with the flow meter device 100 configured as described above, the ground of the integrated circuit 45 of the radio communication circuit board 41 is electrically connected to the housing 10 by the connecting member including the conductive wire 43 and the first screw 23. Therefore, the housing 10 serves as the ground of the radiation conductor 40. This can eliminate a need to provide the ground dedicated to the radiation conductor 40. Therefore, cost of the components can be reduced, and the size of the flow meter device 100 can be reduced.

The housing 10 has a largest surface area among the components formed of the electrically-conductive material which are included in the flow meter device 100. Therefore, if the frequency of the electric wave to be transmitted and received by the radiation conductor 40 is high, the ground with a sufficient size for that wavelength can be ensured. As a result, the intensity of the electric field generated between the radiation conductor 40 and the ground (housing 10) can be improved, and a gain can be improved.

The sum of the vertical length of the housing 10 and the length in the rightward and leftward direction: c + d is equal to or close to λ/4. This can increase an effective area of the antenna and improve antenna characteristics.

The connecting position 44 at which the conductive wire 43 is connected to the ground of the radio communication circuit board 41, the conductive wire 43 and the first screw 23 are in the vicinity the power supplying point 42. Thereby, the distance from the power supplying point 42 to the housing 10 is short. Therefore, the impedance of the antenna becomes low and the antenna characteristic can be improved.

The conductive members such as the conductive wire 43 and the first screw 23, which are placed between the radio communication circuit board 41 and the housing 10 serving as the ground and electrically connected may become ground elements with respect to the radiation conductor 40. If the ground elements are close to the radiation conductor 40, the gain of the radiation conductor 40 becomes low. However, in the present embodiment, the connecting position 44 at which the conductive wire 43 is connected to the ground of the radio communication circuit board 41, the conductive wire 43 and the first screw 23 are on the opposite side of the radiation conductor 40 with respect to the power supplying point 42. Since the ground elements such as the conductive wire 43 and the first screw 23 are placed as distant as possible from the radiation conductor 40 in this way, reduction of the gain can be suppressed.

The radio communication circuit board 41 may become the ground element of a small capacity. However, the area of the radio communication circuit board 41 is very small relative to the area of the housing 10 and the radio communication circuit board 41 is positioned relatively distant from the radiation conductor 40 (in particular, portion from the second corner to the tip end). Because of this, the housing 10 is deemed as substantially the entire ground to the radiation conductor 40, and the radio communication circuit board 41 does not substantially serve as the ground. In other words, a large part of the radio communication circuit board 41 is not deemed ground, but the housing 10 serves as the ground. Since the spacing between the radiation conductor 40 and the ground (housing 10) having a large area increases, excellent antenna characteristics can be attained.

The radiation conductor 40, the circuit board and the housing 10 are placed in this order in the thickness direction of the circuit board. This increases the spacing between the radiation conductor 40 and the housing 10. Therefore, the frequency bandwidth of antenna can be increased and excellent antenna characteristics can be attained.

Since the radiation conductor 40, the circuit board and the housing 10 are placed in parallel with each other, the thickness of the flow meter device 100 can be reduced.

Since the casing 20 is tightly closed (sealed), it becomes possible to prevent the radiation conductor 40, the radio communication circuit board 41 and the like from being oxidated by air, water and the like. This can prevent a change in the impedance of the radiation conductor 40, and therefore maintain stable antenna characteristics.

### (Embodiment 2)

A flow meter device 100 of Embodiment 2 is configured such that the flow meter device 100 of Embodiment 1 further includes parallel resonant circuits 30, 32.

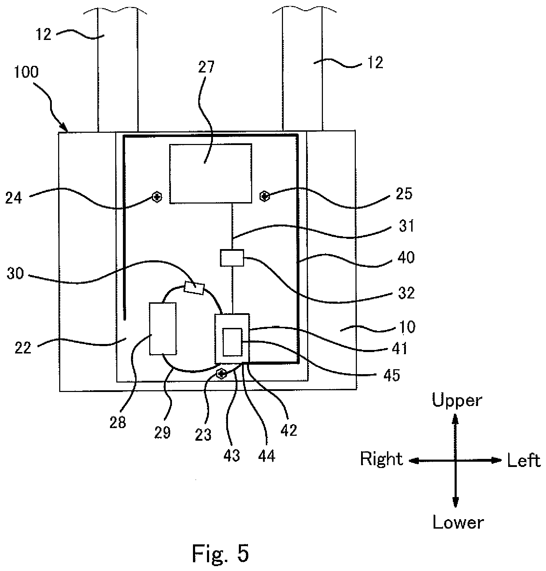

Fig. 5 is a schematic front view showing the interior of the flow meter device 100 according to Embodiment 2 of the present invention.

The flow meter device 100 includes conductive members and a radio frequency isolating circuit. The conductive members are accommodated in the casing 20 and electrically connected to the radio communication circuit board 41. Examples of the conductive members are the battery 28, circuits other than the power supplying circuit, and a circuit board such as the measurement circuit board 27.

The radio frequency isolating circuit is a circuit which electrically insulates (isolates) the integrated circuit 45 (power supplying circuit) from the conductive members with respect to the radio frequency (RF) signal supplied from the radio communication circuit board 41 to the radiation conductor 40. As the radio frequency isolating circuit, the parallel resonant circuits 30, 32 which resonate with the RF signal and increase the impedance are used. The parallel resonant circuits 30, 32 are placed between the radio communication circuit board 41 and the above stated conductive members. The resonant frequency of the parallel resonant circuits 30, 32 conforms to the frequency of the signal used in the radio communication, i.e., the RF signal supplied from the radio communication circuit board 41 to the radiation conductor 40. In other words, the inductance and capacitance of the parallel resonant circuits 30, 32 are set so that the frequency of the RF signal conforms to the resonant frequency. Therefore, the parallel resonant circuits 30, 32 increase the impedance with respect to the RF signal to be used.

In accordance with the flow meter device 100 having the above configuration, for example, the parallel resonant circuit 30 is connected to the wire 29 between the battery 28 and the radio communication circuit board 41. Thereby, DC current flows from the battery 28 to the radio communication circuit board 41, but the battery 28 is isolated from the RF signal. The parallel resonant circuit 32 is connected to the wire 31 between the measurement circuit board 27 and the radio communication circuit board 41. Thereby, a signal is output from the measurement circuit board 27 to the radio communication circuit board 41, but the measurement circuit board 27 is isolated from the RF signal.

As a result, the battery 28 and the measurement circuit board 27 are not deemed as the ground to the radiation conductor 40, and do not become a resistive component with respect to an electric field generated between the radiation conductor 40 and the housing 10. Because of this, this electric field is not attenuated by the battery 28 and the measurement circuit board 27, and hence degradation of the antenna characteristics which would be caused by the battery 28 and the measurement circuit board 27 is suppressed. In other words, the radiation conductor 40, the radio communication circuit board 41 and the housing 10 serving as the ground of the radiation conductor 40 construct an ideal circuit.

In a case where a conductive member which may become the ground element for the radiation conductor 40 and should not serve as the ground, in addition to the battery 28 and the measurement circuit board 27, the parallel resonant circuits 30, 32 configured as described above may be placed.

### (Embodiment 3)

In Embodiment 2, the parallel resonant circuits 30, 32 are used as the radio frequency isolating circuit. By comparison, in Embodiment 3, a photocoupler 51 is used as the radio frequency isolating circuit. For the conductive member such as the battery, for which the photocoupler 51 cannot be used, the parallel resonant circuit is used as the radio frequency isolating circuit.

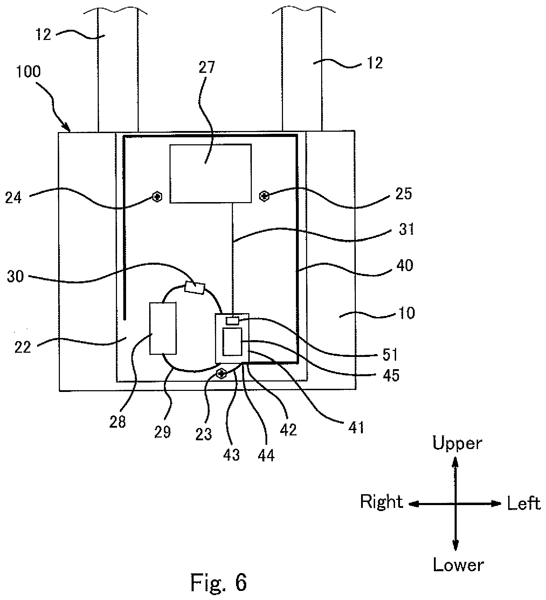

Fig. 6 is a schematic front view showing the interior of the flow meter device 100 according to Embodiment 3 of the present invention.

As the radio frequency isolating circuit for the measurement circuit board 27, the photocoupler 51 is used. The photocoupler 51 is mounted on the radio communication circuit board 41 and connected to the wire 31. The photocoupler 51 is disposed between the integrated circuit 45 (power supplying circuit) and the conductive member such as the measurement circuit board 27. The photocoupler 51 includes a light emitting element and a light receiving element, and transmits an electric signal by using light. The photocoupler 51 converts the electric signal from the integrated circuit of the measurement circuit board 27 into the light and emits this light by the light emitting element. Then, the photocoupler 51 receives this light by the light receiving element, converts the light into the electric signal, and outputs the electric signal to the integrated circuit 45. Because of the photocoupler 51, the electric signal is not directly transmitted and received between the integrated circuit 45 of the radio communication circuit board 41 and the integrated circuit of the measurement circuit board 27. In this way, the photocoupler 51 electrically isolates the integrated circuit 45 from the measurement circuit board 27 with respect to the RF signal supplied from the radio communication circuit board 41.

In accordance with the flow meter device 100 having the above described configuration, the measurement circuit board 27 is not deemed as the ground to the radiation conductor 40. Therefore, the radiation conductor 40, the radio communication circuit board 41 and the housing 10 serving as the ground of the radiation conductor 40 construct an ideal circuit.

### (Embodiment 4)

A flow meter device 100 of Embodiment 4 is configured such that the flow meter device 100 of Embodiment 1 further includes a pipe (conductive pipe) 14 and a pipe member (non-conductive pipe) 13.

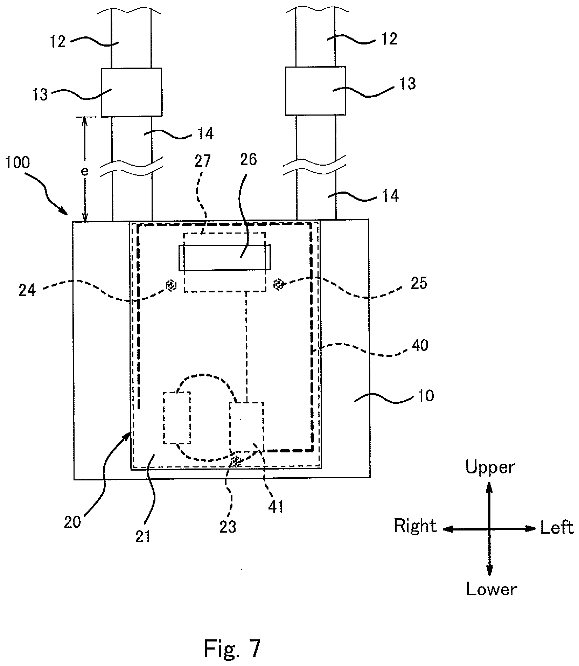

Fig. 7 is a front view showing the flow meter device 100 according to Embodiment 4.

The flow meter device 100 includes the pipes 14 and the pipe members 13.

For example, the the two pipes 14 are connected to the housing 10. The pipes 14 are formed of an electrically-conductive material. As the electrically-conductive material, metal such as aluminum, conductive resin, etc., are used. One ends of the pipes 14 are connected to an inlet and an outlet formed on the upper surface of the housing 10, respectively. The other ends of the pipes 14 are connected to the pipe members 13, respectively.

The length of the pipes 14: e is set based on an antenna gain. Specifically, one cause of a change in the gain of the radiation conductor 40 is a ground size. The ground size is decided according to the dimensions of the ground elements, including the housing 10 and the pipes 14 which are formed of the electrically-conductive material. In view of this, by setting the dimension of the pipes 14 to a suitable length, the gain of the radiation conductor 40 can be improved. In other words, since the pipes 14 are electrically connected to the housing 10, the pipes 14 serve as the ground of the radiation conductor 40 together with the housing 10. In this case, the RF signal from the radio communication circuit board 41 is transmitted in an axial direction of the pipes 14 via the housing 10. Therefore, the length of the pipes 14: e which is suitable to the wavelength of the RF signal and increases the antenna gain is set. The pipe members 13 are connected to the pipes 14, respectively so that this length of the pipes 14: e is obtained.

The pipe members 13 are coupled to the pipes 14, respectively and formed of a non-electrically-conductive material. As the non-electrically-conductive material, for example, there is an electrically-insulative resin such as polypropylene or ABS. Each of the pipe members 13 is disposed between the corresponding pipe 14 and the corresponding pipe 12, to prevent the RF signal from being transmitted from the pipe 14 to the pipe 12.

In accordance with the flow meter device 100 having the above configuration, the pipes 14 are connected to the housing 10, and the pipe members 13 electrically insulate the pipes 14 and the pipes 12 from each other. This allows the housing 10 and the pipes 14 to serve as the ground of the radiation conductor 40. Therefore, the size of the ground with respect to the wavelength of the RF signal can be increased.

By adjusting the length of the pipes 14: e so that the antenna gain can be increased, the antenna gain can be further improved. In other words, by using the pipe members 13 formed of the non-electrically-conductive material, the size of the ground including the housing 10 and the pipes 14 which are the conductive members can be defined so that the radiation conductor 40 can attain a high gain.

Although in all of the above described embodiments, the radiation conductor 40 of the inverted-L antenna is used, the radiation conductor 40 may include a linear conductive element which is other than the inverted-L antenna. As examples of the linear conductive element, for example, there are loop antenna and meander line antenna.

Although in all of the above described embodiments, the linear conductive element is used as the radiation conductor 40, the radiation conductor 40 may include the other conductive element. For example, a planar conductive element such as a planar inverted-F antenna, a linear inverted-L antenna, or planar dipole antenna may be used as the radiation conductor 40. Or, the wire 29 made of a metal foil on the circuit board may be used as the radiation conductor 40.

Although in all of the above described embodiments, the conductive wire 43 and the first screw 23 are used as the connecting member for electrically connecting the radio communication circuit board 41 to the housing 10, the connecting member is not limited to these. For example, the second casing 22 may be provided with a hole and the radio communication circuit board 41 may be fitted into this hole. Thereby, the radio communication circuit board 41 is directly placed on the housing 10, and the radio communication circuit board 41 is mounted to the housing 10 by a conductive bonding agent. This conductive bonding agent serves as the connecting member such that the radio communication circuit board 41 is electrically connected to the housing 10. In this case, the periphery of the hole is sealed so that the interior of the casing 20 is sealed.

In all of the above described embodiments, the radiation conductor 40 and the output section of the radio communication circuit board 41 are joined together by soldering, and the ground of the radio communication circuit board 41 and the conductive wire 43 are joined together by soldering. The joining method is not limited to this, so long as they are electrically connected together. For example, they may be joined together by screws, connector, etc..

In all of the above described embodiments, an ultrasonic gas meter (USM) may be used as the flow meter device 100. In this case, the shape of the housing 10 of a small size may be changed to increase the effective length of the antenna. This can improve the antenna gain. Or, since the housing 10 is small in size, the distance between the radiation conductor 40 and the housing 10 (ground) can be increased, and the gain can be improved.

### Industrial Applicability

As described above, a flow meter device of the present invention is useful as a small-sized flow meter device which improves antenna characteristics as compared to a prior art.

### Reference Signs List

- 10: housing
- 11: sensor
- 13: pipe member (non-conductive pipe)
- 14: pipe (conductive pipe)
- 20: casing
- 23: first screw (connecting member)
- 28: battery (conductive member)
- 27: measurement circuit board (conductive member)
- 30: parallel resonant circuit (radio frequency isolating circuit)
- 32: parallel resonant circuit (radio frequency isolating circuit)
- 40: radiation conductor
- 41: radio communication circuit board (circuit board)
- 43: conductive wire (connecting member)
- 42: power supplying point
- 45: integrated circuit (power supplying circuit)
- 51: photocoupler (radio frequency isolating circuit)

## Claims

1. A flow meter device comprising:
a housing (10) which is formed of an electrically-conductive material and accommodates therein a sensor (11) for detecting a flow of a target;
a radiation conductor (40) which radiates an electric wave of a radio frequency signal;
a circuit board (41) which is electrically connected to the radiation conductor (40) and in which a power supplying circuit for supplying radio-frequency electric power of the radio frequency signal to the radiation conductor (40) is mounted;
a casing (20) which is formed of a non-electrically-conductive material, is placed on the housing (10), and accommodates therein the radiation conductor (40) and the circuit board (41); and
a connecting member (23, 43) which is formed of the electrically-conductive material and electrically connects the housing (10) and a ground of the power supplying circuit to each other,
the circuit board (41) including a power supplying point (42) at which the power supplying circuit (45) and the radiation conductor (40) are electrically connected to each other,
**characterized in that**:
the connecting member (23, 43) is placed in the vicinity of the power supplying point (42) and on an opposite side of the radiation conductor (40) with respect to the power supplying point (42).

2. The flow meter device according to claim 1, further comprising:
a conductive member (28, 27) which is accommodated in the casing (20) and electrically connected to the power supplying circuit (45); and
a parallel resonant circuit (30, 32) which resonates with the radio frequency signal and increases an impedance,
wherein the parallel resonant circuit (30, 32) includes an inductor and a capacitor which are connected in parallel with each other, one end of the parallel resonant circuit (30, 32) is connected to the power supplying circuit (45), and the other end of the parallel resonant circuit (30, 32) is connected to the conductive member (28, 27), and
wherein a resonant frequency of the parallel resonant circuit (30, 32) conforms to a frequency of the radio frequency signal.

3. The flow meter device according to claim 1, comprising:
an integrated circuit accommodated in the casing (20) and electrically connected to the power supplying circuit (45); and
a photocoupler (51) for electrically insulating the power supplying circuit (45) from the conductive member (28, 27);
wherein the photocoupler (51) includes a light emitting element and a light receiving element, converts an electric signal from the integrated circuit into light, emits the light by the light emitting element, receives the light by the light receiving element, converts the light into the electric signal, and outputs the electric signal to the integrated circuit.

4. The flow meter device according to any one of claims 1 to 3, further comprising:
a conductive pipe (14) which is formed of an electrically-conductive material and electrically connected to the housing (10), the conductive pipe (14) and the housing (10) serving as a ground of the radiaton conductor (40); and
a non-conductive pipe (13) which is formed of a non-electrically-conductive material and coupled to the conductive pipe (14),
wherein an axial length of the conductive pipe (14) is set based on a wavelength of the radio frequency signal transmitted in an axial direction of the conductive pipe (14) via the housing (10) and an antenna gain of the radiation conductor (40), and
wherein one end of the conductive pipe (14) is connected to an inlet or an outlet formed on the housing (10), and the other end of the conductive pipe (14) is connected to the non-conductive pipe (13) such that the axial length of the conductive pipe (14) is equal to the set axial length.

## Patentansprüche

1. Durchflussmesservorrichtung, umfassend:
ein Gehäuse (10), das aus einem elektrisch leitfähigen Material gebildet ist und darin einen Sensor (11) zum Erfassen eines Stroms eines Ziels aufnimmt;
einen Strahlungsleiter (40), der eine elektrische Welle eines Funkfrequenzsignals ausstrahlt;
eine Leiterplatte (41), die elektrisch mit dem Strahlungsleiter (40) verbunden ist und in der ein Stromversorgungskreis zum Versorgen des Strahlungsleiters (40) mit elektrischem Funkfrequenzstrom des Funkfrequenzsignals angebracht ist;
eine Hülle (20), die aus einem elektrisch nicht leitfähigen Material gebildet ist, auf dem Gehäuse (10) angeordnet ist und darin den Strahlungsleiter (40) und die Leiterplatte (41) aufnimmt; und
ein Verbindungsteil (23, 43), das aus dem elektrisch leitfähigen Material gebildet ist und das Gehäuse (10) und eine Erdung des Stromversorgungskreises miteinander verbindet,
wobei die Leiterplatte (41) einen Stromversorgungspunkt (42) umfasst, an dem der Stromversorgungskreis (45) und der Strahlungsleiter (40) elektrisch miteinander verbunden sind,
**dadurch gekennzeichnet, dass**
das Verbindungsteil (23, 43) in der Nähe des Stromversorgungspunkts (42) und auf einer gegenüberliegenden Seite des Strahlungsleiters (40) in Bezug auf den Stromversorgungspunkt (42) angeordnet ist.

2. Durchflussmesservorrichtung nach Anspruch 1, ferner umfassend:
ein leitfähiges Teil (28, 27), das in der Hülle (20) aufgenommen und elektrisch mit dem Stromversorgungskreis (45) verbunden ist; und
einen Parallelschwingkreis (30, 32), der mit dem Funkfrequenzsignal schwingt und eine Impedanz erhöht,
wobei der Parallelschwingkreis (30, 32) einen Induktor und einen Kondensator umfasst, die parallel miteinander verbunden sind, wobei ein Ende des Parallelschwingkreises (30, 32) mit dem Stromversorgungskreis (45) verbunden ist und das andere Ende des Parallelschwingkreises (30, 32) mit dem leitfähigen Teil (28, 27) verbunden ist, und
wobei eine Resonanzfrequenz des Parallelschwingkreises (30, 32) mit einer Frequenz des Funkfrequenzsignals übereinstimmt.

3. Durchflussmetervorrichtung nach Anspruch 1, umfassend:
einen integrierten Schaltkreis, der in der Hülle (20) aufgenommen ist und elektrisch mit dem Stromversorgungskreis (45) verbunden ist; und
einen Optokoppler (51) zum elektrischen Isolieren des Stromversorgungskreises (45) von dem leitfähigen Teil (28, 27);
wobei der Optokoppler (51) ein lichtemittierendes Element und ein lichtempfangendes Element umfasst, ein elektrisches Signal aus dem integrierten Schaltkreis in Licht umwandelt, das Licht durch das lichtemittierende Element emittiert, das Licht durch das lichtempfangende Element empfängt, das Licht in das elektrische Signal umwandelt und das elektrische Signal an den integrierten Schaltkreis ausgibt.

4. Durchflussmetervorrichtung nach einem der Ansprüche 1 bis 3, ferner umfassend:
ein leitfähiges Rohr (14), das aus einem elektrisch leitfähigen Material gebildet und elektrisch mit dem Gehäuse (10) verbunden ist, wobei das leitfähige Rohr (14) und das Gehäuse (10) als Erdung des Strahlungsleiters (40) dienen; und
ein nicht leitfähiges Rohr (13), das aus einem nicht leitfähigen Material gebildet und mit dem leitfähigen Rohr (14) gekoppelt ist,
wobei eine axiale Länge des leitfähigen Rohrs (14) basierend auf einer Wellenlänge des Funkfrequenzsignals, das in eine axiale Richtung des leitfähigen Rohrs (14) über das Gehäuse (10) und eine Antennenverstärkung des Strahlungsleiters (40) übertragen wird, festgelegt wird, und
wobei ein Ende des leitfähigen Rohrs (14) mit einem Einlass oder einem Auslass, der auf dem Gehäuse (10) gebildet ist, verbunden ist, und das andere Ende des leitfähigen Rohrs (14) mit dem nicht leitfähigen Rohr (13) verbunden ist, sodass die axiale Länge des leitfähigen Rohrs (14) der festgelegten axialen Länge entspricht.

## Revendications

1. Débitmètre comprenant :
un boîtier (10) qui est formé d'un matériau électriquement conducteur et loge en son sein un capteur (11) destiné à détecter un écoulement d'une cible ;
un conducteur de rayonnement (40) qui fait rayonner une onde électrique d'un signal radio fréquence ;
une carte de circuit (41) qui est électriquement connectée au conducteur de rayonnement (40) et dans laquelle est monté un circuit d'alimentation électrique destiné à alimenter en énergie électrique radiofréquence du signal radiofréquence le conducteur de rayonnement (40) ;
un carter (20) qui est formé d'un matériau non conducteur, placé sur le boîtier (10) et loge en son sein le conducteur de rayonnement (40) et la carte de circuit (41) ; et
un élément de connexion (23, 43) qui est formé du matériau électriquement conducteur et connecte électriquement le boîtier (10) et une terre du circuit d'alimentation électrique l'un à l'autre,
la carte de circuit (41) comprenant un point d'alimentation électrique (42) au niveau duquel le circuit d'alimentation électrique (45) et le conducteur de rayonnement (40) sont électriquement connecté l'un à l'autre,
**caractérisé en ce que** :
l'élément de connexion (23, 43) est placé au voisinage du point d'alimentation électrique (42) et sur un côté opposé du conducteur de rayonnement (40) vis-à-vis du point d'alimentation électrique (42).

2. Débitmètre selon la revendication 1, comprenant en outre :
un élément conducteur (28, 27) qui est logé dans le carter (20) et électriquement connecté au circuit d'alimentation électrique (45) ; et
un circuit de résonance parallèle (30, 32) qui résonne avec le signal radiofréquence et augmente une impédance,
le circuit de résonance parallèle (30, 32) comprenant un inducteur et un condensateur qui sont connectés en parallèle l'un à l'autre, une extrémité du circuit de résonance parallèle (30, 32) étant connectée au circuit d'alimentation électrique (45), et l'autre extrémité du circuit de résonance parallèle (30, 32) étant connectée à l'élément conducteur (28, 27), et
une fréquence de résonance du circuit de résonance parallèle (30, 32) étant conforme à une fréquence du signal radio fréquence.

3. Débitmètre selon la revendication 1, comprenant :
un circuit intégré logé dans le carter (20) et électriquement connecté au circuit d'alimentation électrique (45) ; et
un photocoupleur (51) destiné à isoler électriquement le circuit d'alimentation électrique (45) de l'élément conducteur (28, 27) ;
le photocoupleur (51) comprenant un élément d'émission de lumière et un élément de réception de lumière, convertissant un signal électrique provenant du circuit intégré en lumière, émettant la lumière par l'élément d'émission de lumière, recevant la lumière par l'élément de réception de lumière, convertissant la lumière en signal électrique, et délivrant en sortie le signal électrique au circuit intégré.

4. Débitmètre selon l'une quelconque des revendications 1 à 3, comprenant en outre :
un tuyau conducteur (14) qui est formé d'un matériau électriquement conducteur et électriquement connecté au boîtier (10), le tuyau conducteur (14) et le boîtier (10) servant de terre au conducteur de rayonnement (40) ; et
un tuyau non conducteur (13) qui est formé d'un matériau électriquement non conducteur et couplé au tuyau conducteur (14),
une longueur axiale du tuyau conducteur (14) étant établie sur la base d'une longueur d'onde du signal radiofréquence émis dans une direction axiale du tuyau conducteur (14) via le boîtier (10) et un gain d'antenne du conducteur de rayonnement (40), et
une extrémité du tuyau conducteur (14) étant raccordée à une entrée ou une sortie formée sur le boîtier (10), et l'autre extrémité du tuyau conducteur (14) étant raccordée au tuyau non conducteur (13) de sorte que la longueur axiale du tuyau conducteur (14) soit égale à la longueur axiale définie.
